Europäisches Patentamt

European Patent Office

Office européen des brevets

(19)

(11) Publication number: **0 073 579**
**B1**

(12)
# EUROPEAN PATENT SPECIFICATION

(45) Date of publication of patent specification: **02.12.87**

(51) Int. Cl.⁴: **G 01 N 35/02**

(21) Application number: **82304166.0**

(22) Date of filing: **06.08.82**

(54) **Discrete-type automated analyzer.**

(30) Priority: **27.08.81 US 296760**

(43) Date of publication of application:
**09.03.83 Bulletin 83/10**

(45) Publication of the grant of the patent:
**02.12.87 Bulletin 87/49**

(84) Designated Contracting States:
**BE CH DE FR GB IT LI NL SE**

(56) References cited:
**DE-C-1 773 390**
**US-A-3 978 992**
**US-A-4 276 258**

(73) Proprietor: **TECHNICON INSTRUMENTS
CORPORATION**
**511 Benedict Avenue**
**Tarrytown, New York 10591 (US)**

(72) Inventor: **Uffenheimer, Kenneth F.**
**Woodland Road R.F.D.No. 2**
**Mahopac New York 10541 (US)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

## Description

The invention relates to an automated, discrete type, biochemical analytical system.

In the field of automated biochemical analytical systems, wherein samples are reacted and analyzed in respect of one or more analytes, it is often desirable that the analyses be performed on a selective basis in respect of each sample. Because of the high demand of clinical laboratories, it is required that such systems should provide, in addition to accurate analytical results, a high through-put and versatility and, also, low reagent consumption to reduce the cost per input test.

Present-day analytical systems may be divided into two categories. One such category includes the continuous-flow analytical systems, such as described in the L. Skeggs *et al* U.S. Patent 3,241,341 and the W. Smythe *et al* U.S. Patent 3,479,141. In such systems, continuous streams of successive sample segments and reagent are introduced, at properly related flow rates, into the system and passed along an analytical channel, wherein the successive samples are reacted and analyzed in respect of a same analyte. As described, the stream of sample segments can be divided, or split, into a number of aliquot streams, which are directed each along individual analytical channels to be reacted and analyzed in respect of a particular analyte. The analytical results derived from the analytical channels are thereafter correlated with respect to the patient or source. While such systems as described in the Skeggs *et al* patent are not selective, in that a fixed battery of analyses is performed, such systems do exhibit an extremely high through-put and are capable of satisfying the test requirements of large clinical laboratories. However, the Smythe *et al* patent describes a continuous-flow system of high through-put, wherein selectivity is obtained by injecting or introducing, on a selective basis and on in-line fashion, precise volumes of reagents to react with successive sample segments flowing in a continuous stream.

The second category (such as in U.S. patent specification no. 3621215) includes discrete-type analyzers, wherein properly related volumes of sample and reagent are introduced into a reaction cuvette, the resulting reaction product being measured to determine the concentration of the analyte. Such systems may be adapted to perform a single type of analysis, termed a batch-type system, or to perform different types of analyses in respect of the individual samples. In such systems, a plurality of reaction cuvettes can be formed into an integral reaction tray, for example as described in our European patent application no. 82303211.5 filed 21st June 1982 (EP—A—70623, published 26th Jan. 1983). Such tray is rotated to advance each cuvette, in turn, between a reagent addition station, a sample addition station, and an analytical or read-out station.

To obtain maximum versatility, discrete-type systems are often adapted to perform different types of analyses, so as to quantitate various analytes of interest present in biological samples. Such types of reactions can be divided into three types. The first type of reaction can be described as a zero-order rate reaction, as performed in respect of aspartate aminotransferase, alkaline phosphotase, etc., wherein the concentration of the reaction product to be measured varies linearly with time. The second type of reaction can be defined as a first-order rate reaction, as performed in respect of urea nitrogen, creatinine, etc., wherein the concentration of the reaction product varies non-linearly with time. The third type of reaction can be defined as an end-point reaction, as performed in respect of glucose, total protein, etc., wherein the reaction goes to completion before measurement. As is appreciated, analyte quantitation in respect of each of such reactions requires that multiple measurements be made, e.g. colorimetrically, of the reaction product. To achieve highly accurate results, therefore, it is essential that such multiple measurements be made in respect of each individual cuvette, whether supported individually or integrally formed in the reaction tray, under identical conditions. Unless this is achieved, accuracy of the analytical result is reduced.

Generally, reaction cuvettes used in discrete-type analytical systems are formed of plastic or glass. As each cuvette is located, in turn, at the read-out station, a beam of light of predetermined wavelength, depending upon the analyte to be quantitated, is passed therethrough and along a sight path of controlled length extending through the reaction mixture. Any variation in the thickness or quality of any imperfections or residues on the cuvette walls defining the sight path would materially affect the light transmissive properties of the cuvette. Hence, any misalignment of the individual cuvette during the multiple readings would change the proper relationship of the successive analytical results, or read-outs, with respect to the reference base-line, which is itself determined by a read-out process.

Hence, unless each individual cuvette is precisely repositioned or aligned at the read-out station, the quantitation of the analyte would not be accurate. We have now devised an analytical system by which accurate repositioning or alignment of the cuvettes in a reaction tray at the read-out station, or at any other station or location, can be achieved, whereby successive analyte measurements may be made under identical conditions and accuracy of the analyte measurement is ensured.

According to the present invention, there is provided an analytical system which comprises a cuvette tray comprising a plurality of cuvettes circularly arranged about a rotational axis, at least a first photometric measuring station located with respect to said cuvette tray and at which at least a selected one of said cuvettes is to be repetitively positioned, and means for rotating said cuvette tray about said axis, characterised in that said rotating means is arranged to rotate the cuvette tray bidirectionally about said axis, and means are provided for controlling said rotating means to rotate said cuvette tray in a first direction to locate said selected cuvette at said first station, said controlling means being operative to control said rotating means to rotate said cuvette tray in a second direction prior to rotating said cuvette tray in said first direction to reposition said selected cuvette at said first station.

The invention also provides a method for repetitively effecting photometric measurements in a liquid in a selected cuvette of a rotatable cuvette tray comprising a plurality of cuvettes, which cuvette is provided with a sight passageway for reading of the liquid therein at a photometric measuring station (RO), which method comprises:

(1) rotating said cuvette tray to locate said selected cuvette at said station;

(2) photometrically measuring said liquid in said selected cuvette at said station;

(3) rotating said cuvette tray;

(4) repositioning said cuvette at said station by rotating said cuvette tray; and

(5) again photometrically measuring said liquid in said selected cuvette at said station;

characterised by rotating said cuvette tray during steps (1) and (4) in a first direction, and during step (3) in a second and opposite direction.

In known present-day automated discrete-type analyzers, a reaction tray comprising a plurality of cuvettes is rotated unidirectionally to successively advance each cuvette, in turn, between different treatment stations, i.e. a reagent-addition station, a sample-addition station, and a read-out station. To reposition a cuvette at a particular treatment station, it is required that the reaction tray effect a full revolution. Usually, the reaction tray is indexed by a stepping motor coupled via toothed drive belt and a toothed pulley arrangement. We have realised, however, that positional errors can be introduced in the repositioning process due to tooth-to-tooth dimensional errors in the drive belt or gear arrangement, which may be inherent imperfections or result from wear. These dimensional errors are unpredictable and can result in a misalignment of the individual cuvettes in the repositioning process. In the case of the read-out station, the result is that the same opposing wall portions of the individual cuvette do not define the sight path during successive measurements, or read-outs, whereby the reliability of the analytical results, particularly in the case of zero-order and first-order rate reaction, is not optimal.

Thus, we have found that such repositioning errors can be very substantially avoided, if the same sections of toothed drive belt and drive pulleys are used in respect of the successive repositionings of the individual cuvettes. This is achieved, according to the present invention, by adapting the reaction tray to be rotated bidirectionally, whereby a same section of the drive belt is used to displace and reposition the individual cuvettes at the read-out station. Although a unidirectional rotation of the reaction tray would be less costly to implement and would not extend the operational cycle, the bidirectional rotation of the cuvette ensures that multiple readings of individual cuvettes at the read-out station are made under substantially identical conditions and that highly reliable analytical results can thereby be obtained.

In order that the invention may be more fully understood, reference is made to the accompanying drawings, in which:

Figure 1 is a diagrammatic view of one embodiment of a discrete-type biochemical analyzer according to the present invention;

Figure 2 is a top view of the biochemical analyzer of Figure 1; and

Figure 3 is a timing diagram illustrating a single operational cycle of the biochemical analyzer of Figure 1.

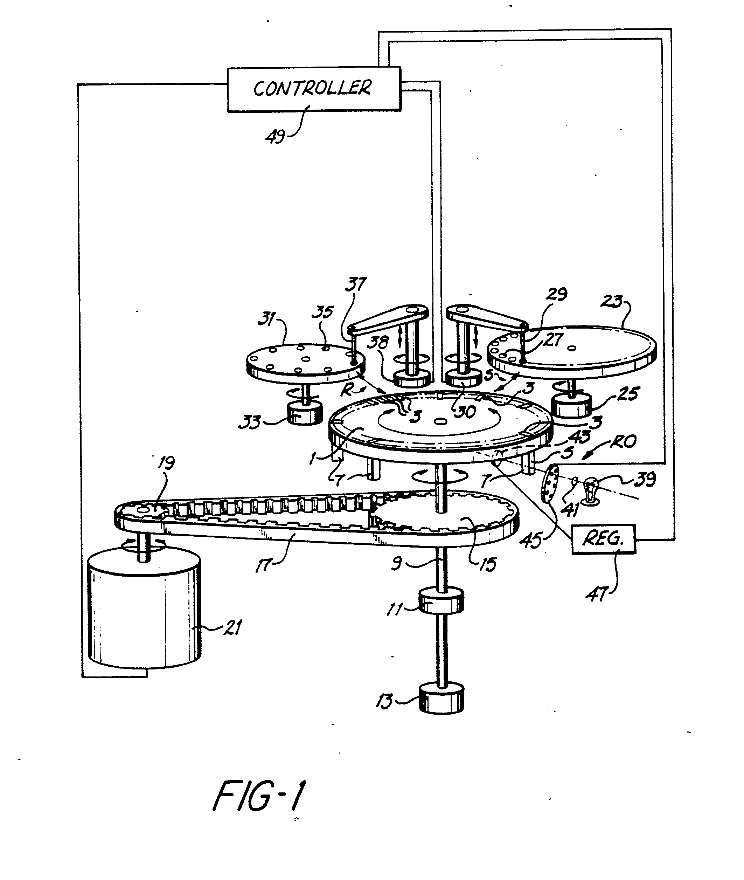

Referring now to Figure 1, a discrete-type biochemical analytical system is illustrated, which includes a circular reaction tray 1 comprising a plurality of reaction cuvettes 3. Preferably, reaction tray 1 is of the type described in our European patent application no. 82303211.5 (EP—A—70623, publ. 26th Jan. 1983) wherein cuvettes 1 are integrally formed and circularly arranged about the axis of rotation. Each cuvette 3 has an open upper end and at least two radially aligned opposing transparent walls 5 and 7.

Tray 1 is removably mounted and keyed on a vertical shaft 9 supported by bearings 11 and 13. Shaft 9 carries a toothed pulley 15, which is engaged by a toothed drive belt 17 driven by toothed drive pulley 19 carried on the shaft of a reversible stepping motor 21. Motor 21 is operative to rotate tray 1 in either a clockwise or counterclockwise direction, as indicated by the arrow, through a sequence of angular positions.

The samples to be successively analyzed are carried on a sample tray 23 disposed adjacent to reaction tray 1 and mounted on the shaft of an AC synchronous motor 25. Sample tray 23 comprises a plurality of sample receptacles 27 arranged in circular fashion about the rotational axis of such tray. Motor 25 is operative to unidirectionally index sample tray 23, to successively advance receptacles 27, in turn, to a take-off position below an aspirating/dispensing probe 29. Probe 29 is adapted, under the control of drive mechanism 30, for vertical reciprocal and for bidirectional rotational movement, as indicated by the arrows, so as to be selectively positioned over and immersed into a receptacle 27 and into a cuvette 3 advanced to sample-dispense station S. Probe 29 operates to aspirate a precise aliquot of the sample contained in such receptacle 27 and to dispense or load the same into such cuvette 3.

Also, a reagent tray 31 is disposed adjacent to tray 1 and supported on the shaft of an AC synchronous motor 33. Reagent tray 31 is adapted to be unidirectionally advanced by motor 33 to selectively position an appropriate reagent below the aspirating/dispensing probe 37. Probe 37 is adapted, under the control of drive mechanism 38, for vertical reciprocal movement and for bidirectional rotational movement, as indicated by the arrows, so as to be selectively positioned over and immersed into reagent container 35 and into a cuvette 3 selectively advanced to reagent-dispense station R. Probe 37 operates to aspirate a precise volume of reagent contained in such container 35 and dispense or load the same into such cuvette 3.

Probes 29 and 37 may be of the aspirating/dispensing type described in our U.S. Patent 4,121,466. As described, such probe is normally filled with a pilot fluid which is immiscible with the aqueous liquid, i.e. sample or reagent, to be aspirated and dispensed. Also, an immiscible liquid is flowed downwardly, at a controlled rate, over the outer probe surface, to coat and prevent contact of such surface with the liquid to be aspirated. Accordingly, contamination is positively avoided between the successive liquids, whether sample or reagent, into which the probe is immersed. During the actual aspiration and dispense cycles, the flow of immiscible liquid over the probe surface may be discontinued. The operation of probes 29 and 37 are hereafter more particularly described.

The contents of cuvettes 3 are colorimetrically analyzed, in turn, at read-out station RO, to quantitate the particular analyte for which the contained sample has been reacted. Station RO comprises a light source 39 and collimating lens 41 for directing a beam of light through walls 5 and 7 of cuvette 3 positioned thereat. A detector 43 is located to receive the emerging light beam and generates an electrical signal indicative of the color depth, or analyte concentration, of the reacted sample disposed between windows 5 and 7. Also, a multi-filter wheel 45 is interposed between collimating lens 41 and wall 5 of positioned cuvette 3, which determines the wavelength of the light beam. As is known, a particular analyte is normally absorptive of light of a particular wavelength, the degree of absorption being indicative of the analyte concentration in the reacted sample. The output signal of detector 43 is directed to a register 47, which is adapted to store said signals, on an individual sample basis.

The operation of the system of Figure 1 is under the control of a controller 49, which is inputted by an operator to identify, as to source patient, each sample loaded in sample tray 23 and, also, to indicate the particular analysis to be effected of each such sample. According to such inputs, controller 49 implements a number of sub-routines for controlling the various components of the system to selectively analyze each such sample, as hereinafter described.

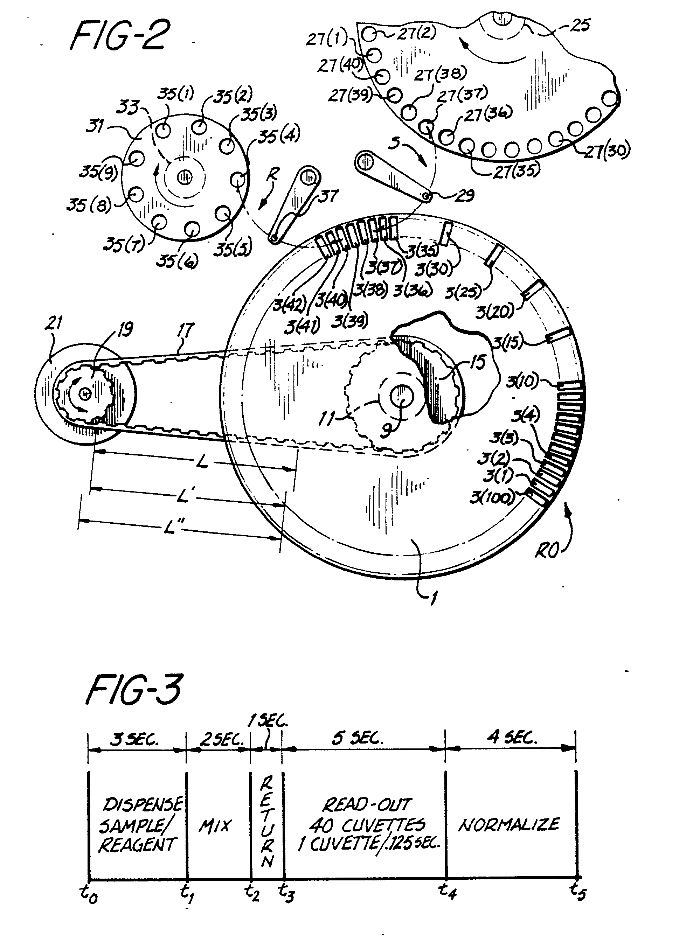

The operation of the embodiment of analytical system of the present invention is more readily understood by reference to Figures 1, 2 and 3, wherein like references have been used to denote corresponding structures. For purposes of description, it is assumed that (1) tray 1 comprises one-hundred cuvettes 3, (2) forty indexing positions of tray 1 are defined between station R and station RO, and (3) there indexing positions of tray are defined between station R and station S. It is further assumed that, at least, cuvettes 3 (1) through 3 (35) of Figure 2 have had both reagent and sample dispensed therein and, also, cuvettes 3 (36) through 3 (39) have had reagent dispensed therein preparatory to the dispensing thereof of sample contained in receptacles 27 (36) through 27 (39), respectively, at station S.

Under such system conditions, controller 49 operates under appropriate sub-routines to operate motor 33 to locate at station R an appropriate receptacle 35, e.g. receptacle 35 (4), containing the appropriate reagent to react sample contained in sample receptacle 27 (40); to operate motor 25 to advance the next receptacle 27 (37) containing the sample to be reacted in the reagent-loaded cuvette 3 (37) at station S and into which an appropriate reagent has been previously dispensed; and to operate stepping motor 21 to advance cuvettes 3 (37) and 3 (40) to stations S and R, respectively. Thereafter, controller 49 operates drive mechanisms 30 and 38 to concurrently control probes 29 and 37, respectively, to aspirate appropriate volumes of sample and reagent, respectively, from receptacles 27 (37) and 35 (4) and to dispense the same into cuvettes 3 (37) and 3 (40) positioned at stations R and S, respectively. Such dispensing operation occurs during time interval $t_0$—$t_1$ of Figure 3, which may be of three-second duration for example.

Following the dispensing cycle and when drive mechanisms 30 and 38 have returned probes 29 and 37 to their normal positions over sample tray 23 and reagent tray 31, respectively, controller 49 operates stepping motor 21 to advance tray 1 in short, rapid incremental steps, to mix the contents of each "loaded" cuvette 3 during time interval $t_1$—$t_2$, which may have a two-second duration, for example. Thus, tray 1 may be advanced or indexed, say, twenty-eight angular positions, with a momentary abrupt stop at each position. Such mixing is effected in incremental steps shorter and, also at a rate faster than the normal indexing of tray 1. During the mixing cycle, the contents of all "loaded" cuvettes 3 are sufficiently agitated to ensure thorough mixing of their contents. Following the mixing cycle, at time $t_2$, controller 49 reverses stepping motor 21 to return cuvette 3 (37) and 3 (40) to stations S and R, respectively, and to reposition cuvette 3 (1) at station RO. Return of the cuvettes in this way is known as normalisation of tray 1 and is effected during time interval $t_2$—$t_3$ which may have a one-second duration for example.

Following the mixing and normalization cycles, at time $t_3$, controller 49 operates stepping motor 21 to index tray 1 in a clockwise direction, to advance cuvettes 3 (1) through 3 (40), in turn, to station RO. Synchronously controller 49 operates wheel 45 to selectively position an appropriate filter to pass light an appropriate wavelength through each of the cuvettes 3 (1) through 3 (36), in turn, to effect a particular analyte analysis. As only reagent is present in cuvettes 3 (37) through 3 (40), the output of detector 43 in respect of each such cuvette is stored as the base line for the subsequent quantitation of a particular analyte to be subsequently analyzed in such cuvettes. The successive outputs of detector 43 are stored in register 49, under the control of controller 49, according to the source patient identified by the operator in respect of cuvettes 3 (1) through 3 (40). For purposes of discription, tray 1 may be indexed one position each .125 second, such that cuvettes 3 (1) through 3 (40) are read out during time interval $t_3$—$t_4$, which may have a five-second duration for example.

When the read-out cycle has been completed at time $t_4$, cuvette 3 (40) is located at station RO and the contents of each of cuvettes 3 (1) through 3 (40) have been successively analyzed and the analytical results appropriately stored in register 47. During time interval $t_4$—$t_5$, which may have a four-second duration for example, controller 49 operates stepping motor 21 to rotate tray 1 in a counterclockwise direction, to prepare the system for the next dispensing cycle (this is also called a "normalising" step). Preferably, the reverse indexing of tray 1 duplicates the forward indexing of tray 1, except for being effected in a reverse direction. Also, the reverse indexing of tray 1 is terminated when cuvette 3 (2) is located at station RO, cuvette 3 (41) is located at station R, and cuvette 3 (37) is located at station S, that is, tray 1 is reverse indexed to one angular position less than it had been forward-indexed. It should be appreciated, however, that tray 1 can be reverse indexed to any number of angular positions, depending upon the particular requirements of the system.

When the system of Figure 1 is normalized at time $t_5$, controller 49 commences a next operating cycle by operating motor 25 to advance the next receptacle 27 (38) to station S and motor 33 to advance, for example, receptacle 35 (1) to station R. Thereupon, controller 49 operates drive mechanisms 30 and 38 to control probes 29 and 37, respectively, to aspirate and dispense appropriate volumes of sample from receptacle 27 (38) and reagent from receptacle 35 (1) into cuvettes 3 (38) and 3 (41), respectively, located at stations S and R, respectively. As mentioned above, reagent dispensed into cuvette 3 (41) is intended for reaction with the sample contained in receptacle 27 (41), which will be dispensed into cuvette 3 (41) when advanced to station S.

Upon completion of the aspirate/dispense cycle, at time $t_2$, controller 49 operates stepping motor 21 to effect a next mixing cycle, as described above, to agitate and mix the contents of all "loaded" cuvettes 3 in tray 1 and to subsequently normalize tray 1, at time interval $t_3$, i.e. to reposition cuvettes 3 (41), 3 (37), and 3 (2) at stations R, S and RO, respectively. Thereafter, stepping motor 21 is operated by controller 49 to advance each cuvette 3 (2) through 3 (41), in turn, through station RO, whereat the contents of such cuvettes are analyzed, in turn, and the analytical results, i.e., the output of detector 43, are stored in register 47 in respect of the corresponding source patients, as described above. When cuvette 3 (41) is located at station RO, controller 49 operates motor 21 to rotate tray 1 in a counterclockwise direction. Tray 1 is reverse indexed through thirty-nine angular positions, to locate cuvette 3 (3) at station RO, cuvette 3 (42) at station R and cuvette 3 (39) at station S, preparatory to a next operational cycle.

It is evident that during operation, forty distinct analyses will be made of the contents of each cuvette 3, the analytical results being stored in correlated fashion in regulater 47 in respect of source patient, whose identification was initially inputted to controller 49. As multiple readouts are made of each cuvette, register 47 is operated to use only selected ones of such readings in the calculation and printing out the final analytical results identified with the appropriate source patients. Generally, in respect of zero-order rate reactions, nine selected readouts may be used to calculate the analyte concentration by a conventional "best fit" technique. Also, in respect of first-order rate reactions, two readouts only need be used in the calculation of the analyte concentration, one being the initial "base line" readout of the corresponding cuvette 3 prior to sample addition. Finally, in respect of end-point reactions, both the "base line" readout and one additional readout are used to calculate the analyte concentration. The calculation techniques employed are well-known in the art.

As successive readouts are required to calculate analyte concentration and to ensure accurate analytical results, the successive positionings of each cuvette at station RO, at least, must be exactly duplicated. Such exact repositioning ensures that variations in the light transmission properties due to transmission or geometric nonuniformities of the walls 5 and 7 of each cuvette 3 are cancelled out for each successive measurement, that is, such variations are constant for each measurement. Exact repositioning is achieved by rotating tray 1 a reverse direction, so as to normalize the system, whereby the relationship of belt 17 and drive pulleys 15 and 19 is fixed and invariable in respect to the positioning of each individual cuvette 3 at a treatment station, say, RO. A same length of belt 17 is used in successively positioning each cuvette 3 at station RO. For example, and considering cuvette 3 (40) positioned at station R, such cuvette is indexed during the read-out cycle, at time $t_3$—$t_4$, through forty angular positions by passage of a section L of belt 17 over drive pulley 19, as indicated in Figure 3. During such read-out cycle the passage of section L', of belt 17 over drive pulley 19 equivalent to thirty-nine angular positions, is effective to position cuvette 3 (39) at station RO. During the normalizing cycle, at time $t_4$—$t_5$, section L' of belt 17 is returned over drive pulley 19 to locate cuvette 3 (41) at station R, cuvette 3 (40) having been normalized to one angular position beyond station R. During the next read-out cycle, a section L" of belt 17, including section L' and equivalent to forty angular positions of tray 1, is passed over drive pulley 19 to advance cuvette 3 (41) to station RO. The passage of section L' of belt 17 over drive pulley 19, at this time, is effective to advance cuvette 3 (40) through thirty-nine angular positions to be exactly repositioned at station RO. Any dimensional errors in those portions of belt 17 actually engaging pulleys 15 and 19 or either of the pulleys will affect the positioning of cuvette 3 (39) at station RO. It is evident that, however, as there is no play or slippage between belt 17 and pulleys 15 and 19 and because of the reversal of belt 17 during each normalizing cycle, the relationship of such belt to each of the pulleys will be exactly duplicated during each repositioning of each cuvette 3 (39) at station RO. Therefore, any dimensional error in those portions of belt 17 engaging pulleys 15 and 19 or in either of such pulleys is effectively cancelled, i.e. exactly duplicated, during each such repositioning. Accordingly, if any tooth-to-tooth dimensional error should exist in any portion of belt 17 or in any portion of either of the pulleys 15 and 19, a positioning error is introduced only when such portion of belt 17 engages either of pulleys 15 or 19 or when such portion of the pulley is engaged by belt 17 and would affect only the initial alignment or positioning of a particular cuvette at a treatment station, say, RO. However, since the relationship of belt 17 and pulleys 15 and 19 is fixed with respect to each cuvette, a same positioning error is re-introduced during each successive repositioning of such cuvette at a treatment station, whereby the position of such cuvette is exactly duplicated. In prior art discrete-type analyzers, a repositioning of a cuvette at a particular station requires a complete revolution of tray 1 and, unless the drive belt, such as 17, is exactly equal to that length required to rotate tray 1 through one revolution, the relationship of the drive belt to the driving pulleys is not fixed and invariable with respect to each cuvette and any tooth-to-tooth dimensional errors would be cumulative, whereby an exact repositioning of each such cuvette at a particular treatment station could not be duplicated.

## Claims

1. An analytical system which comprises a cuvette tray (1) comprising a plurality of cuvettes (3) circularly arranged about a rotational axis, at least a first photometric measuring station (RO) located with respect to said cuvette tray and at which at least a selected one of said cuvettes is to be repetitively positioned, and means (21, 19, 17, 15, 9) for rotating said cuvette tray about said axis, characterised in that said rotating means is arranged to rotate the cuvette tray bidirectionally about said axis, and means (49) are provided for controlling said rotating means to rotate said cuvette tray in a first direction to locate said selected cuvette at said first station, said controlling means being operative to control said rotating means to rotate said cuvette tray in a second direction prior to rotating said cuvette tray in said first direction to re-position said selected cuvette at said first station.

2. A system according to claim 1, further including a second treatment station (R) located with respect to said cuvette tray and spaced a predetermined number N of angular positions of said cuvette tray from said first station, and wherein said rotating means is operative to rotate said cuvette tray through a number N of angular positions in said first direction and through a number of angular positions less than N in said second direction.

3. A system according to claim 2, wherein said rotating means is operative to rotate said cuvette tray through a number of angular positions equal to N-1 in said second direction.

4. A system according to claim 1, 2 or 3, wherein said rotating means includes a toothed drive pulley (15) fixedly supported with respect to said tray and a toothed belt (17) engaging said drive pulley.

5. A system according to claim 2, or claim 3 or 4 when dependent on claim 2, wherein said second station is a reagent-dispensing station, and the system further comprises a third treatment station (S), which is a sample-dispensing station, located with respect to said cuvette tray and intermediate said first and second stations.

6. A system according to claim 5, wherein said second station (R) includes a reagent tray (31) and an aspirating/dispensing probe (37) for selectively dispensing a controlled volume of reagent into a cuvette (3) positioned at said second station, and said third station (S) includes a sample tray (23) and an aspirating/dispensing probe (29) for dispensing a controlled volume of sample to be analyzed in a cuvette positioned at said third station, said dispensing probes being operative during a dispensing cycle.

7. A system according to claim 6, wherein said aspirating/dispensing probes (37, 29) at said second (R) and third (S) stations are operative concurrently during a dispensing cycle, so as to dispense reagent and sample into cuvettes located at said second and third stations, respectively.

8. A system according to claim 6 or 7, wherein said rotating means (21, 19, 17, 15, 9) are operative, following a dispensing cycle, to rotate said cuvette tray unidirectionally a number of incremental steps, during a mixing cycle, to mix the contents of said cuvettes and to subsequently rotate said cuvette tray in an opposite direction.

9. A system according to claim 8, wherein said rotating means (21, 19, 17, 15, 9) is operative to effect the incremental stepping of said cuvette tray at a same or faster rate than the angular positioning of said cuvette tray.

10. A system according to any preceding claim, wherein said first station (RO) includes colorimetric means (39, 41, 43, 45) for measuring the optical absorbance of the contents of each cuvette (3) positioned thereat and for generating an analytical signal, and register means (47) for storing said analytical signal.

11. A method for repetitively effecting photometric measurements on a liquid in a selected cuvette of a rotatable cuvette tray (1) comprising a plurality of cuvettes (3), which cuvette is provided with a sight passageway for reading of the liquid therein at a photometric measuring station (RO), which method comprises:

(1) rotating said cuvette tray to locate said selected cuvette at said station;

(2) photometrically measuring said liquid in said selected cuvette at said station;

(3) rotating said cuvette tray;

(4) repositioning said cuvette at said station by rotating said cuvette tray; and

(5) again photometrically measuring said liquid in said selected cuvette at said station;

characterised by rotating said cuvette tray during steps (1) and (4) in a first direction, and during step (3) in a second and opposite direction.

12. A method according to claim 11, wherein rotating said cuvette tray in a first direction comprises rotating said cuvette tray through N angular positions in said first direction and rotating said cuvette tray in said second and opposite direction comprises rotating said cuvette tray in less than N angular positions.

13. A method according to claim 12, wherein rotating said cuvette tray in said second and opposite direction comprises rotating said cuvette tray through N-1 angular positions.

**Patentansprüche**

1. Analytisches System enthaltend einen Küvettenteller (1) mit einer Vielzahl von Küvetten (3), die kreisförmig um eine Drehachse angeordnet sind, wenigstens eine erste photometrische Meßstation (RO), die in Beziehung zu dem Küvettenteller lokalisiert ist und bei der wenigstens eine ausgewählte der Küvetten wiederholt zu positionieren ist, und eine Vorrichtung (21, 19, 17, 15, 9) zum Drehantrieb des Küvettentellers um die genannte Achse, dadurch gekennzeichnet, daß die Drehantriebsvorrichtung zur bidirektionalen Drehung des Küvettentellers um die genannte Achse ausgebildet ist und Mittel (49) zur Steuerung der Drehantriebsvorrichtung vorgesehen sind, um den Küvettenteller zum Lokalisieren der ausgewählten Küvette bei der ersten Station in einer ersten Richtung zu drehen, und die Steuerungsmittel wirksam sind, um die Drehantriebsvorrichtung zum Drehen des Küvettentellers in einer zweiten Richtung zu steuern, bevor der Küvettenteller zum Repositionieren der ausgewählten Küvette bei der ersten Station eine Drehung in der ersten Richtung ausführt.

2. System nach Anspruch 1, ferner enthaltend eine zweite Behandlungsstation (R), die in Beziehung zu dem Küvettenteller lokalisiert ist und um eine vorbestimmte Anzahl N von Winkelpositionen des Küvettentellers von der ersten Station beabstandet ist, und in welchem die Drehantriebsvorrichtung wirksam ist, um den Küvettenteller um eine Anzahl N von Winkelpositionen in der ersten Richtung und um eine Anzahl von Winkelpositionen, die kleiner als N ist, in der zweiten Richtung zu drehen.

3. System nach Anspruch 2, in welchem die Drehantriebsvorrichtung wirksam ist, um den Küvettenteller um eine Anzahl von Winkelpositionen, die gleich N-1 ist, in der zweiten Richtung zu drehen.

4. System nach Anspruch 1, 2 oder 3, in welchem die Drehantriebsvorrichtung eine Zähne aufweisende Antriebsrolle (15), die in bezug auf den Teller fest angebracht ist, und einen mit Zähnen versehenen Riemen (17) enthält, der in die Antriebsrolle eingreift.

5. System nach Anspruch 2 oder nach Anspruch 3 oder 4, wenn abhängig von Anspruch 2, in welchem die zweite Station eine Reagenz-Abgabestation ist, und das System ferner eine dritte Behandlungsstation (S) aufweist, bei der es sich um eine Proben-Abgabestation handelt und die in Beziehung zu dem Küvettenteller und zwischen der ersten und zweiten Station lokalisiert ist.

6. System nach Anspruch 5, in welchem die zweite Station (R) einen Reagenzteller (31) und eine Ansaug/Abgabesonde (37) zum wahlweisen Abgeben eines gesteuerten Volumens von Reagenz in eine bei der zweiten Station positionierte Küvette (3) enthält und die dritte Station (S) einen Probenteller (23) und eine Ansaug/Abgabesonde (29) zum Abgeben eines gesteuerten Volumens von zu analysierender Probe in eine bei der dritten Station positionierte Küvette enthält, wobei die Abgabesonden während eines Abgabezyklus wirksam sind.

7. System nach Anspruch 6, in welchem die Ansaug/Abgabesonden (37, 29) bei der zweiten (R) und der dritten (S) Station während eines Abgabezyklus gleichzeitig wirksam sind, um Reagenz und Probe in bei der zweiten bzw. dritten Station lokalisierte Küvetten abzugeben.

8. System nach Anspruch 6 oder 7, in welchem die Drehantriebsvorrichtung (21, 19, 17, 15, 9) im Anschluß an einen Abgabezyklus wirksam ist, um den Küvettenteller während eines Mischzyklus zum Mischen der Inhalte der genannten Küvetten in einer Richtung um eine Anzahl von Inkrementalschritten zu drehen und um anschließend den Küvettenteller in entgegengesetzter Richtung zu drehen.

9. System nach Anspruch 8, in welchem die Drehantriebsvorrichtung (21, 19, 17, 15, 9) wirksam ist, um die inkrementale Schrittbewegung des Küvettentellers mit einer gleichen oder schnelleren Geschwindigkeit als die Winkelpositionierung des Küvettentellers auszuführen.

10. System nach irgendeinem vorangehenden Anspruch, in welchem die erste Station (RO) eine kolorimetrische Einrichtung (39, 41, 43, 45) zum Messen der optischen Extinktion durch die Inhalte jeder dort positionierten Küvette (3) und zum Erzeugen eines Analysensignals sowie eine Registereinrichtung (47) zum Speichern des Analysensignals enthält.

11. Verfahren zur wiederholten Ausführung photometrischer Messungen an einer Flüssigkeit in einer ausgewählten Küvette eines drehbaren Küvettentisches mit einer Vielzahl von Küvetten (3), welche Küvette mit einem Sichtdurchgang zur Vornahme von Ablesungen an der darin befindlichen Flüssigkeit bei einer photometrischen Meßstation (RO) versehen ist, welches Verfahren enthält:

(1) Drehen des Küvettentellers zum Lokalisieren der ausgewählten Küvette bei der Station,

(2) photometrisches Messen der Flüssigkeit in der ausgewählten Küvette bei der Station,

(3) Drehen des Küvettentellers,

(4) Repositionieren der Küvette bei der Station durch Drehen des Küvettentellers, und

(5) nochmaliges photometrisches Messen der Flüssigkeit in der ausgewählten Küvette bei der Station,

gekennzeichnet durch Drehen des Küvettentellers während der Schritte (1) und (4) in einer ersten Richtung und während des Schrittes (3) in einer zweiten und entgegengesetzten Richtung.

12. Verfahren nach Anspruch 11, in welchem das Drehen des Küvettentellers in einer ersten Richtung ein Drehen des Küvettentellers um N Winkelpositionen in der ersten Richtung umfaßt und das Drehen des Küvettentellers in der zweiten und entgegengesetzten Richtung ein Drehen des Küvettentellers um weniger als N Winkelpositionen umfaßt.

13. Verfahren nach Anspruch 12, in welchem das Drehen des Küvettentellers in der zweiten und entgegengesetzten Richtung ein Drehen des Küvettentellers um N-1 Winkelpositionen umfaßt.

**Revendications**

1. Système d'analyse qui comprend un plateau à cuvettes (1) comportant une pluralité de cuvettes (3) disposées en cercle autour d'un axe de rotation, au moins un poste de mesure photométrique (RO) positionné par rapport audit plateau à cuvettes et auquel au moins l'une sélectionnée desdites cuvettes doit être placée de manière répétitive, et un moyen (21, 19, 17, 15, 9) de rotation dudit plateau à cuvettes autour dudit axe, caractérisé en ce que ledit moyen de rotation est agencé pour faire tourner le plateau à cuvettes dans les deux sens autour dudit axe, et des moyens (49) sont prévus pour commander ledit moyen de rotation de façon qu'il fasse tourner ledit plateau à cuvettes dans un premier sens pour positionner ladite cuvette sélectionnée audit premier poste, les dits moyens de commande assurant la commande dudit moyen de rotation de façon à faire tourner ledit plateau à cuvettes dans un second sens avant de le faire tourner dans ledit premier sens pour replacer ladite cuvette sélectionnée audit premier poste.

2. Système selon la revendication 1, comportant encore un second poste de traitement (R) positionné par rapport au dit plateau à cuvettes et séparé dudit premier poste par un nombre déterminé N d'emplacements angulaires dudit plateau à cuvettes, et dans lequel ledit moyen de rotation assure en outre la rotation dudit plateau à cuvettes sur un nombre N d'emplacements angulaires dans ledit premier sens et sur un nombre d'emplacements angulaires inférieur à N dans ledit second sens.

3. Système selon la revendication 2, dans lequel ledit moyen de rotation assure la rotation dudit plateau à cuvettes sur un nombre d'emplacements angulaires égal à N-1 dans le dit second sens.

4. Système selon la revendication 1, 2 ou 3, dans lequel ledit moyen de rotation comporte une poulie d'entraînement dentée (15) supportée de manière fixe par rapport audit plateau et une courroie dentée (17) en prise avec ladite poulie d'entraînement.

5. Système selon la revendication 2, ou la revendication 3 ou 4 lorsqu'elles dépendent de la revendication 2, dans lequel ledit second poste est un poste de dispensation de réactif, et le système comprend encore un troisième poste de traitement (S), qui est un poste de dispensation d'échantillons, positionné par rapport audit plateau à cuvettes et situé entre lesdits premier et second postes.

6. Système selon la revendication 5, dans lequel ledit second poste (R) comporte un plateau à réactif (31) et une sonde d'aspiration-dispensation (37) pour dispenser sélectivement un volume contrôlé de réactif dans une cuvette (3) placée audit second poste, et ledit troisième poste (S) comporte un plateau à échantillons (23) et une sonde d'aspiration-dispensation (29) pour dispenser un volume contrôlé d'échantillon à analyser dans une cuvette placée audit troisième poste, lesdites sondes de dispensation agissant au cours d'un cycle de dispensation.

7. Système selon la revendication 6, dans lequel lesdites sondes d'aspiration-dispensation (37, 29) prévues auxdits second (R) et troisième (S) postes agissent concurremment au cours d'un cycle de dispensation, de façon à dispenser du réactif et de l'échantillon dans des cuvettes situées auxdits second et troisième postes, respectivement.

8. Système selon la revendication 6 ou 7, dans lequel lesdits moyens de rotation (21, 19, 17, 15, 9) assurent, à la suite d'un cycle de dispensation, la rotation dudit plateau à cuvettes en sens unique d'un certain nombre de pas incrémentiels, au cours d'un cycle de mélange, pour mélanger le contenu desdites cuvettes et ultérieurement la rotation dudit plateau à cuvettes dans le sens opposé.

9. Système selon la revendication 8, dans lequel ledit moyen de rotation (21, 19, 17, 15, 9) assure la progression par incréments dudit plateau à cuvettes à la même vitesse ou plus vite que le positionnement angulaire dudit plateau à cuvettes.

10. Système selon toute revendication précédente, dans lequel ledit premier poste (RO) comporte des moyens colorimétriques (39, 41, 43, 45) pour mesurer l'absorbance optique du contenu de chaque cuvette (3) placée à leur niveau et pour engendrer un signal d'analyse, et des moyens enregistreurs (47) pour mettre en mémoire ledit signal d'analyse.

11. Procédé pour effectuer de manière répétitive des mesures photométriques sur un liquide contenu dans une cuvette sélectionnée d'un plateau à cuvettes rotatif (1) comprenant une pluralité de cuvettes (3), laquelle cuvette présente un passage de visée pour la lecture du liquide qu'il contient en un poste de mesure photométrique (RO), lequel procédé comprend:

(1) la rotation dudit plateau à cuvettes pour le positionnement de ladite cuvette sélectionnée audit poste;

(2) la mesure photométrique dudit liquide présent dans la dite cuvette sélectionnée située audit poste;

(3) la rotation dudit plateau à cuvettes;

(4) la remise en place de ladite cuvette audit poste par rotation dudit plateau à cuvettes; et

(5) une nouvelle mesure photométrique dudit liquide contenu dans ladite cuvette sélectionnée située audit poste;

caractérisé en ce qu'on fait tourner ledit plateau à cuvettes dans un premier sens lors des étapes (1) et (4) et dans un second sens, opposé, lors de l'étape (3).

12. Procédé selon la revendication 11, dans lequel la rotation dudit plateau à cuvettes dans un premier sens comprend la rotation dudit plateau à cuvettes sur N emplacements angulaires dans ledit premier sens et la rotation dudit plateau à cuvettes dans ledit second sens, opposé, comprend la rotation dudit plateau à cuvettes sur moins de N emplacements angulaires.

13. Procédé selon la revendication 12, dans lequel la rotation dudit plateau à cuvettes dans ledit second sens, opposé, comprend la rotation dudit plateau à cuvettes sur N-1 emplacements angulaires.

0 073 579

FIG-1

FIG-2

FIG-3